(19) Europäisches Patentamt
European Patent Office
Office européen des brevets

(11) **EP 4 160 730 A1**

(12) **EUROPEAN PATENT APPLICATION**
published in accordance with Art. 153(4) EPC

(43) Date of publication:
**05.04.2023 Bulletin 2023/14**

(21) Application number: **21813841.0**

(22) Date of filing: **02.04.2021**

(51) International Patent Classification (IPC):
*H01M 4/133* (2010.01)       *H01M 4/134* (2010.01)
*H01M 4/36* (2006.01)        *H01M 4/42* (2006.01)
*H01M 4/587* (2010.01)       *H01M 4/62* (2006.01)
*H01M 10/052* (2010.01)      *H01M 10/0562* (2010.01)
*H01M 10/0565* (2010.01)     *H01M 10/0585* (2010.01)

(52) Cooperative Patent Classification (CPC):
**H01M 4/133; H01M 4/134; H01M 4/36; H01M 4/42;
H01M 4/587; H01M 4/62; H01M 10/052;
H01M 10/0562; H01M 10/0565; H01M 10/0585;
Y02E 60/10; Y02P 70/50**

(86) International application number:
**PCT/JP2021/014408**

(87) International publication number:
**WO 2021/241001 (02.12.2021 Gazette 2021/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.05.2020 JP 2020093001**

(71) Applicant: **Panasonic Intellectual Property
Management Co., Ltd.
Osaka-shi, Osaka 540-6207 (JP)**

(72) Inventors:
• **HIRASE Masaki
Osaka-shi, Osaka 540-6207 (JP)**

• **ITO Shuji
Osaka-shi, Osaka 540-6207 (JP)**
• **NISHIYAMA Seiji
Osaka-shi, Osaka 540-6207 (JP)**
• **MINEYA Kunihiko
Osaka-shi, Osaka 540-6207 (JP)**
• **MATSUMURA Tadaaki
Osaka-shi, Osaka 540-6207 (JP)**
• **ITO Yusuke
Osaka-shi, Osaka 540-6207 (JP)**

(74) Representative: **Eisenführ Speiser
Patentanwälte Rechtsanwälte PartGmbB
Postfach 31 02 60
80102 München (DE)**

(54) **BATTERY**

(57)     A battery 2000 of the present disclosure includes a positive electrode 203, a negative electrode 201 including graphite and zinc, and a solid electrolyte layer 202 positioned between the positive electrode 203 and the negative electrode 201. A ratio of a mass of zinc to a sum of a mass of graphite and the mass of zinc in the negative electrode 201 is 10 mass% or more and 60 mass% or less. The above ratio may be 20 mass% or more and 40 mass% or less.

FIG.1

**Description**

TECHNICAL FIELD

The present disclosure relates to a battery.

BACKGROUND ART

Nonaqueous electrolyte secondary batteries are used, for example, as the power source for devices such as portable electronic devices, electric vehicles, and power storage devices. Nonaqueous electrolyte secondary batteries are charged and discharged, for example, by moving lithium ions between a positive electrode and a negative electrode. Nonaqueous electrolyte secondary batteries are required to have an enhanced energy density and an enhanced input and output density.

In recent years, all-solid-state secondary batteries have attracted attention as nonaqueous electrolyte secondary batteries. All-solid-state secondary batteries have, for example, a positive electrode, a negative electrode, and a solid electrolyte layer positioned between the positive electrode and the negative electrode. In all-solid-state secondary batteries, a solid electrolyte is used as the medium for conducting lithium ions. All-solid-state secondary batteries are characterized in that all the members are formed of solid materials, compared to conventional batteries in which an electrolyte solution is used as the medium for conducting lithium ions. All-solid-state secondary batteries are disclosed, for example, in Patent Literatures 1 and 2.

CITATION LIST

Patent Literature

    Patent Literature 1: JP 2018-106984 A
    Patent Literature 2: JP 2018-137056 A

Non Patent Literature

Non Patent Literature 1: Jiqiang Wang et al., "Investigations of binary lithium-zinc, lithium-cadmium and lithium-lead alloys as negative electrodes in organic solvent-based electrolyte", Solid State Ionics 1986, Vol. 20, pp. 185-189.

SUMMARY OF INVENTION

Technical Problem

In conventional arts, batteries are desired to have enhanced cycle characteristics.

Solution to Problem

A battery of the present disclosure includes:

    a positive electrode;
    a negative electrode including graphite and zinc; and
    a solid electrolyte layer positioned between the positive electrode and the negative electrode, wherein
    a ratio of a mass of zinc to a sum of a mass of graphite and the mass of zinc in the negative electrode is 10 mass% or more and 60 mass% or less.

Advantageous Effects of Invention

According to the present disclosure, it is possible to enhance the cycle characteristics of the battery.

BRIEF DESCRIPTION OF DRAWINGS

FIG. 1 is a cross-sectional view schematically showing the configuration of a battery of Embodiment 1.
FIG. 2 is a cross-sectional view schematically showing the configuration of a battery of Embodiment 2.
FIG. 3 is a cross-sectional view schematically showing the configuration of a three-electrode battery.

DESCRIPTION OF EMBODIMENTS

(Findings on which the present disclosure is based)

Conventionally, graphite is used as a negative electrode active material of nonaqueous electrolyte secondary batteries. To enhance the energy density of nonaqueous electrolyte secondary batteries, silicon has been recently proposed as a negative electrode active material. Silicon is one of materials that can form an alloy with lithium. Silicon has a higher capacity per mass than graphite. On the other hand, silicon greatly expands and contracts along with charge and discharge. For this reason, batteries including silicon as a negative electrode active material have a problem that the cycle characteristics are liable to deteriorate due to a contact failure between the active materials, a contact failure between the active material and a current collector, or the like.

In all-solid-state batteries, all interfaces of an active material and an electrolyte are solid-solid interfaces. Thus, in all-solid-state batteries, deterioration of the joined state at solid-solid interfaces due to expansion and contraction of an active material greatly affects the battery performance, compared to conventional batteries in which an electrolyte solution is used as the medium for conducting lithium ions. In particular, in the case where a material such as silicon, which greatly expands and contracts along with charge and discharge, is used as a negative electrode active material of all-solid-state batteries, a problem relevant to deterioration of the cycle characteristics is likely to occur.

As a result of intensive studies, the present inventors have newly found that the cycle characteristics of solid-state batteries are enhanced by using a mixture of graphite and zinc in an appropriately adjusted mass ratio as a negative electrode active material. Zinc is one of materials that is expected, when used as a negative electrode active material, to be able to form an alloy with lithium and enhance the energy density of nonaqueous electrolyte secondary batteries. Furthermore, the volume expansion rate of zinc in alloying with lithium to form LiZn is lower than the volume expansion rate of silicon in alloying with lithium to form $Li_{22}Si_5$. For example, zinc has a volume expansion rate of approximately 200%, and silicon has a volume expansion rate of approximately 400%. However, the use of zinc as a negative electrode active material of all-solid-state secondary batteries has not been sufficiently studied until now for the following reasons (1) to (3) and the like. (1) The true specific gravity of zinc is 7.1 $g/cm^3$, which is higher than those of graphite and silicon. For example, the true specific gravity of each of graphite and silicon is approximately 2.3 $g/cm^3$. (2) The theoretical capacity density per unit mass of zinc is 410 mAh/g, which is higher than that of graphite but lower than that of silicon. For example, the theoretical capacity density per unit mass of graphite is 372 mAh/g. The theoretical capacity density per unit mass of silicon is 4198 mAh/g. (3) When a battery including zinc as a negative electrode active material is discharged from the fully charged state, the composition of the negative electrode active material changes from LiZn to $Li_{0.4}Zn$ as a result of release of Li. The change of the composition of the negative electrode active material to $Li_{0.4}Zn$ decreases the discharge reaction rate, as disclosed in Non Patent Literature 1. Thus, this battery tends to have an initial charge and discharge efficiency that is low.

In the field of all-solid-state batteries, to suppress deterioration of the joined state at solid-solid interfaces due to expansion and contraction of an active material and thereby to enhance the battery performance, it has been proposed to control the particle diameter of the active material and to perform charge and discharge operations of a battery in a state where a pressure is applied to a battery element. For example, Patent Literature 1 discloses that, with respect to an all-solid-state battery in which silicon particles having a specific average particle diameter are used as a negative electrode active material, a confining pressure of 10 MPa or 45 MPa is applied to a battery element. Patent Literature 2 discloses that, with respect to an all-solid-state battery in which silicon is used as a negative electrode active material, a confining pressure of 21 MPa is applied to a battery element with a confining member. Patent Literature 2 further discloses that when charge and discharge of a battery are repeated, the state of charge of the battery can be estimated with high accuracy based on the change in confining pressure caused by expansion and contraction of an active material. From the viewpoint of reducing the size of the member for confining the battery element to enhance the energy density of the entire battery, it is desired to reduce the confining pressure to be applied to the battery element.

(Outline of one aspect according to the present disclosure)

A battery according to a first aspect of the present disclosure includes:

a positive electrode;
a negative electrode including graphite and zinc; and
a solid electrolyte layer positioned between the positive electrode and the negative electrode, wherein

a ratio of a mass of zinc to a sum of a mass of graphite and the mass of zinc in the negative electrode is 10 mass% or more and 60 mass% or less.

According to the first aspect, zinc in the negative electrode tends to expand during charge of the battery. When zinc expands, a pressure is applied, inside the battery, to a stack including the positive electrode, the negative electrode, and the solid electrolyte layer in a direction in which the stack is compressed. At this time, voids inside the negative electrode decrease, and accordingly the joined state at solid-solid interfaces in the negative electrode tends to be improved. For example, the joined state of the interface between graphite and zinc in the negative electrode tends to be improved. Owing to improvement of the joined state of the interface between graphite and zinc mixed in an appropriate ratio, it is possible to enhance the cycle characteristics of the battery.

In a second aspect of the present disclosure, for example, in the battery according to the first aspect, the ratio may be 20 mass% or more and 40 mass% or less. According to such a configuration, it is possible to enhance the input and output characteristics of the battery.

In a third aspect of the present disclosure, for example, the battery according to the first or second aspect may further include a stack including the positive electrode, the negative electrode, and the solid electrolyte layer; and a confining member confining the stack. According to such a configuration, it is possible to enhance the input and output characteristics and the cycle characteristics of the battery.

In a fourth aspect of the present disclosure, for example, in the battery according to the third aspect, a confining pressure applied to the stack by the confining member may be 10 MPa or more and 200 MPa or less. According to such a configuration, it is possible to enhance the input and output characteristics and the cycle characteristics of the battery.

In a fifth aspect of the present disclosure, for example, in the battery according to the fourth aspect, the confining pressure may be 10 MPa or more and 50 MPa or less. According to such a configuration, it is possible to enhance the input and output characteristics and the cycle characteristics of the battery.

In a sixth aspect of the present disclosure, for example, in the battery according to the fourth or fifth aspect, the confining pressure may be 30 MPa or more and 50 MPa or less. According to such a configuration, it is possible to further enhance the output characteristics of the battery.

In a seventh aspect of the present disclosure, for example, in the battery according to any one of the first to sixth aspects, the negative electrode may include a graphite particle and a zinc particle. According to such a configuration, it is possible to easily produce a negative electrode.

In an eighth aspect of the present disclosure, for example, in the battery according to any one of the first to seventh aspects, the negative electrode may have: a negative electrode mixture layer including graphite and zinc; and a negative electrode current collector in contact with the negative electrode mixture layer, and a ratio of a mass of zinc to a sum of a mass of graphite and the mass of zinc in the negative electrode mixture layer may be 10 mass% or more and 60 mass% or less. According to such a configuration, it is possible to enhance the cycle characteristics of the battery.

In a ninth aspect of the present disclosure, for example, in the battery according to any one of the first to eighth aspects, the negative electrode may further include a solid electrolyte having lithium-ion conductivity. According to such a configuration, the ionic conductivity in the negative electrode is enhanced, and accordingly the input and output characteristics of the battery are further enhanced.

Embodiments of the present disclosure will be described below with reference to the drawings.

(Embodiment 1)

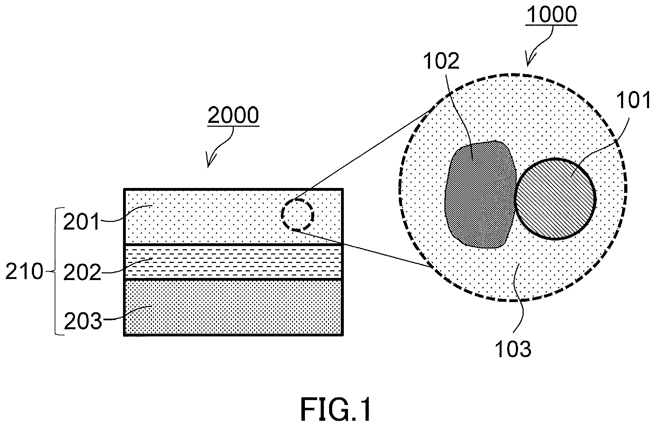

FIG. 1 is a cross-sectional view schematically showing the configuration of a battery 2000 of Embodiment 1.

The battery 2000 of Embodiment 1 includes a negative electrode 201, a solid electrolyte layer 202, and a positive electrode 203.

The negative electrode 201 includes a negative electrode material 1000. The negative electrode material 1000 includes graphite and zinc. A ratio P of the mass of zinc to the sum of the mass of graphite and the mass of zinc in the negative electrode 201 is 10 mass% or more and 60 mass% or less. The ratio P may be 20 mass% or more and 40 mass% or less.

The solid electrolyte layer 202 is positioned between the positive electrode 203 and the negative electrode 201.

According to the above configuration, it is possible to enhance the cycle characteristics of the battery 2000.

The negative electrode 201, the solid electrolyte layer 202, and the positive electrode 203 are stacked in this order, for example. In other words, the battery 2000 includes, for example, a stack 210 including the negative electrode 201, the solid electrolyte layer 202, and the positive electrode 203. The stack 210 functions, for example, as a battery element.

In the negative electrode material 1000, graphite and zinc each function as an active material. Graphite and zinc each may have a particulate shape. In other words, the negative electrode material 1000 may include a graphite particle 101 and a zinc particle 102. In the present disclosure, the "particulate" shape may be acicular, spherical, ellipsoidal, or the like. In the negative electrode material 1000, a plurality of graphite particles 101 and a plurality of zinc particles 102 may be in contact with each other, thereby forming an electron conduction path.

The negative electrode material 1000 may further include a solid electrolyte 103. The solid electrolyte 103 fills, for example, between the plurality of graphite particles 101 and the plurality of zinc particles 102. The solid electrolyte 103 may also have a particulate shape. A large number of particles of the solid electrolyte 103 may be compressed to be bonded to each other, thereby forming an ion conduction path.

In Embodiment 1, the median diameter of the graphite particles 101 may be 0.1 $\mu$m or more and 100 $\mu$m or less. Further, the median diameter of the zinc particles 102 may be 0.1 $\mu$m or more and 100 $\mu$m or less.

In the case where the median diameter of the graphite particles 101 and the median diameter of the zinc particles 102 are 0.1 $\mu$m or more, the graphite particles 101, the zinc particles 102, and the solid electrolyte 103 easily form a favorable dispersion state in the negative electrode material 1000. This enhances the charge characteristics of the battery.

In the case where the median diameter of the graphite particles 101 and the median diameter of the zinc particles 102 are 100 $\mu$m or less, the diffusion rate of lithium in the graphite particles 101 and the zinc particles 102 is sufficiently ensured. This enables the battery to operate at a high power.

The median diameter of the graphite particles 101 and the median diameter of the zinc particles 102 may be larger than that of the solid electrolyte 103. This enables the graphite particles 101, the zinc particles 102, and the solid electrolyte 103 to form a favorable dispersion state.

Graphite constituting the graphite particles 101 may be natural graphite or may be artificial graphite.

Oxide films may be formed on the surfaces of the zinc particles 102. The content of oxygen in the zinc particles 102 is not particularly limited, and is, for example, 2 mass% or less.

As the solid electrolyte 103, a solid electrolyte having lithium-ion conductivity can be used, for example. In this case, it is possible to provide a lithium-ion battery having a high capacity by using the negative electrode material 1000.

As the solid electrolyte 103, at least one selected from an inorganic solid electrolyte and an organic solid electrolyte can be used. The solid electrolyte 103 may include at least one selected from the group consisting of a sulfide solid electrolyte, an oxide solid electrolyte, a halide solid electrolyte, a polymer solid electrolyte, and a complex hydride solid electrolyte. Specific examples of sulfide solid electrolytes, oxide solid electrolytes, halide solid electrolytes, polymer solid electrolytes, and complex hydride solid electrolytes are described later for the solid electrolyte layer 202. At least one selected from the group consisting of all the solid electrolytes described later can be used as the solid electrolyte 103.

To achieve a favorable dispersion state, the solid electrolyte 103 should be desirably formed of a soft material. From this viewpoint, at least one selected from the group consisting of a sulfide solid electrolyte and a halide solid electrolyte is suitable as the solid electrolyte 103.

The shape of the solid electrolyte 103 of Embodiment 1 is not particularly limited, and may be, for example, acicular, spherical, ellipsoidal, or flaky. For example, the shape of the solid electrolyte 103 may be particulate.

For example, in the case where the shape of the solid electrolyte 103 of Embodiment 1 is particulate (e.g., spherical), its median diameter may be 0.01 $\mu$m or more and 100 $\mu$m or less. In the case where the median diameter is 0.01 $\mu$m or more, the contact interface between the particles of the solid electrolyte 103 does not excessively increase, and accordingly an increase in ion resistance inside the negative electrode material 1000 can be suppressed. This enables the battery to operate at a high power.

In the case where the median diameter of the solid electrolyte 103 is 100 $\mu$m or less, the graphite particles 101, the zinc particles 102, and the solid electrolyte 103 easily form a favorable dispersion state in the negative electrode material 1000. This facilitates an increase in capacity of the battery.

In Embodiment 1, the median diameter of the solid electrolyte 103 may be smaller than those of the graphite particles 101 and the zinc particles 102. This enables the graphite particles 101, the zinc particles 102, and the solid electrolyte 103 to form a more favorable dispersion state in the negative electrode material 1000.

The negative electrode material 1000 may further include an active material other than the graphite particles 101 and the zinc particles 102. The shape of the other active material is not particularly limited, and may be, for example, acicular, spherical, or ellipsoidal. For example, the shape of the other active material may be particulate.

The median diameter of the other active material may be 0.1 $\mu$m or more and 100 $\mu$m or less.

In the case where the median diameter of the other active material is 0.1 $\mu$m or more, the other active material and the solid electrolyte 103 easily form a favorable dispersion state in the negative electrode material 1000. This enhances the charge characteristics of the battery.

In the case where the median diameter of the other active material is 100 $\mu$m or less, the diffusion rate of lithium in the active material is sufficiently ensured. This enables the battery to operate at a high power.

The median diameter of the other active material may be larger than that of the solid electrolyte 103. This enables the active material and the solid electrolyte 103 to form a favorable dispersion state.

The other active material includes a material having properties of occluding and releasing metal ions (e.g., lithium ions). As the other active material, a metal material, a carbon material other than graphite, an oxide, a nitride, a tin compound, a silicon compound, or the like can be used. The metal material may be a metal simple substance. Alternatively, the metal material may be an alloy. Examples of the metal material include lithium metal and a lithium alloy. Examples of the carbon material include coke, semi-graphitized carbon, a carbon fiber, spherical carbon, and amorphous carbon. From the viewpoint of capacity density, silicon (Si), tin (Sn), a silicon compound, and a tin compound can be suitably used.

The other active material may include a single active material, or may include a plurality of active materials having different compositions.

According to the above configuration, it is possible to enhance the charge capacity of the battery.

In Embodiment 1, the graphite particle 101, the zinc particle 102, and the particle of the solid electrolyte 103 may be in contact with each other as shown in FIG. 1.

The negative electrode material 1000 of Embodiment 1 may include a plurality of graphite particles 101, a plurality of zinc particles 102, and a plurality of particles of the solid electrolyte 103.

In the negative electrode material 1000, the content of the solid electrolyte 103 and the sum of the content of graphite and the content of zinc may be equal to or different from each other.

When the total amount of the negative electrode material 1000 is defined as 100 wt%, the sum of the content of graphite and the content of zinc may be, for example, 40 wt% or more and 80 wt% or less. Appropriate adjustment of the sum of the content of graphite and the content of zinc facilitates the graphite particles 101, the zinc particles 102, and the solid electrolyte 103 to form a favorable dispersion state.

The negative electrode material 1000 may include only the graphite particles 101, the zinc particles 102, and the solid electrolyte 103. In other words, the negative electrode material 1000 may consist substantially of the graphite particles 101, the zinc particles 102, and the solid electrolyte 103. According to such a configuration, it is possible to enhance the energy density of the battery. The phrase "include only the graphite particles 101, the zinc particles 102, and the solid electrolyte 103" means that no other materials except inevitable impurities are intentionally included in the negative electrode material 1000.

In general, the term "median diameter" means the particle diameter at a cumulative volume equal to 50% in the volumetric particle size distribution. The volumetric particle size distribution is measured, for example, by a laser diffraction measurement device.

In the weight ratio "w: 100 - w" of the active material to the solid electrolyte 103 included in the negative electrode 201, $40 \leq w \leq 80$ may be satisfied. In the case where $40 \leq w$ is satisfied, the energy density of the battery 2000 is sufficiently ensured. Furthermore, in the case where $w \leq 80$ is satisfied, the battery 2000 can operate at a high power.

The negative electrode 201 may have a negative electrode mixture layer including the negative electrode material 1000 and a negative electrode current collector in contact with the negative electrode mixture layer. The ratio of the mass of zinc to the sum of the mass of graphite and the mass of zinc in the negative electrode mixture layer may be 10 mass% or more and 60 mass% or less, or may be 20 mass% or more and 40 mass% or less. As the negative electrode current collector, a copper foil can be used, for example.

The bulk density of the negative electrode mixture layer is not particularly limited, and is, for example, 2.0 g/cm$^3$ or more and 2.8 g/cm$^3$ or less. In the present description, the bulk density may be referred to as the filling density. The filling rate of the negative electrode mixture layer is not particularly limited, and is, for example, 62% or more and 71% or less. The filling rate of the negative electrode mixture layer is the ratio of the bulk density of the negative electrode mixture layer to the true density of the negative electrode mixture layer. The true density of the negative electrode mixture layer means the density of the negative electrode mixture layer where no voids exist inside the negative electrode mixture layer.

The thickness of the negative electrode 201 may be 10 $\mu$m or more and 500 $\mu$m or less. In the case where the thickness of the negative electrode 201 is 10 $\mu$m or more, the energy density of the battery 2000 is sufficiently ensured. In the case where the thickness of the negative electrode 201 is 500 $\mu$m or less, the battery 2000 can operate at a high power.

The solid electrolyte layer 202 is a layer including a solid electrolyte.

As the solid electrolyte included in the solid electrolyte layer 202, an inorganic solid electrolyte having lithium-ion conductivity is used, for example. As the inorganic solid electrolyte, a sulfide solid electrolyte, an oxide solid electrolyte, a halide solid electrolyte, or the like is used.

As the solid electrolyte included in the solid electrolyte layer 202, a halide solid electrolyte may be used.

The halide solid electrolyte is represented by, for example, the following composition formula (1). In the composition formula (1), $\alpha$, $\beta$, and $\gamma$ are each independently a value greater than 0. The element M includes at least one element selected from the group consisting of a metalloid element and a metal element other than Li. The element X includes at least one selected from the group consisting of F, Cl, Br, and I.

$$Li_\alpha M_\beta X_\gamma \ ... \qquad \text{Formula (1)}$$

Metalloid elements include B, Si, Ge, As, Sb, and Te. Metal elements include all the elements included in Groups 1 to 12 of the periodic table except for hydrogen and all the elements included in Groups 13 to 16 of the periodic table except for B, Si, Ge, As, Sb, Te, C, N, P, O, S, and Se. In other words, metal elements are a group of elements that can become cations when forming an inorganic compound with a halogen compound.

As the halide solid electrolyte, $Li_3YX_6$, $Li_2MgX_4$, $Li_2FeX_4$, $Li(Al, Ga, In)X_4$, $Li_3(Al, Ga, In)X_6$, or the like can be used.

According to the above configuration, it is possible to enhance the output density of the battery 2000. Furthermore, it is possible to enhance the thermal stability of the battery 2000 to suppress generation of a noxious gas such as hydrogen sulfide.

In the present disclosure, when an element in a formula is denoted as "(Al, Ga, In)", this denotation represents at least one element selected from the group of elements in parentheses. In other words, "(Al, Ga, In)" is synonymous with "at least one selected from the group consisting of Al, Ga, and In". The same applies to other elements. The halide solid electrolyte exhibits an excellent ionic conductivity.

In the composition formula (1), M may include Y (= yttrium). In other words, the halide solid electrolyte included in the solid electrolyte layer 202 may include Y as a metal element.

The halide solid electrolyte including Y may be a compound represented by the following composition formula (2).

$$€Li_aM_bY_cX_6 \text{ ...} \qquad \text{Formula (2)}$$

The composition formula (2) satisfies a + mb + 3c = 6 and c > 0.

In the composition formula (2), M includes at least one element selected from the group consisting of a metalloid element and a metal element other than Li and Y The symbol m represents the valence of M. The element X includes at least one selected from the group consisting of F, Cl, Br, and I. The element M includes at least one selected from the group consisting of Mg, Ca, Sr, Ba, Zn, Sc, Al, Ga, Bi, Zr, Hf, Ti, Sn, Ta, and Nb. Specific examples which can be used as the halide solid electrolyte including Y include $Li_3YF_6$, $Li_3YCl_6$, $Li_3YBr_6$, $Li_3YI_6$, $Li_3YBrCl_5$, $Li_3YBr_3Cl_3$, $Li_3YBr_5Cl$, $Li_3YBr_5I$, $Li_3YBr_3I_3$, $Li_3YBrI_5$, $Li_3YClI_5$, $Li_3YCl_3I_3$, $Li_3YCl_5I$, $Li_3YBr_2Cl_2I_2$, $Li_3YBrCl_4I$, $Li_{2.7}Y_{1.1}Cl_6$, $Li_{2.5}Y_{0.5}Zr_{0.5}Cl_6$, and $Li_{2.5}Y_{0.3}Zr_{0.7}Cl_6$.

According to the above configuration, it is possible to further enhance the output density of the battery 2000.

The solid electrolyte included in the solid electrolyte layer 202 may include a sulfide solid electrolyte.

According to the above configuration, since a sulfide solid electrolyte having an excellent reduction stability is included, a low-potential negative electrode material such as graphite or metallic lithium can be used, thereby enhancing the energy density of the battery 2000.

Examples which can be used as the sulfide solid electrolyte include $Li_2S$-$P_2S_5$, $Li_2S$-$SiS_2$, $Li_2S$-$B_2S_3$, $Li_2S$-$GeS_2$, $Li_{3.25}Ge_{0.25}P_{0.75}S_4$, and $Li_{10}GeP_2Si_2$. LiX, $Li_2O$, $MO_q$, $Li_pMO_q$, or the like may be added to these. Here, the element X in "LiX" is at least one element selected from the group consisting of F, Cl, Br, and I. The element M in "$MO_q$" and "$Li_pMO_q$" is at least one element selected from the group consisting of P, Si, Ge, B, Al, Ga, In, Fe, and Zn. The symbols p and q in "$MO_q$" and "$Li_pMO_q$" are each an independent natural number.

Examples which can be used as the sulfide-based solid electrolyte include lithium-containing sulfides such as those based on $Li_2S$-$P_2S_5$, $Li_2S$-$SiS_2$, $Li_2S$-$B_2S_3$, $Li_2S$-$GeS_2$, $Li_2S$-$SiS_2$-$LiI$, $Li_2S$-$SiS_2$-$Li_3PO_4$, $Li_2S$-$Ge_2S_2$, $Li_2S$-$GeS_2$-$P_2S_5$, and $Li_2S$-$GeS_2$-$ZnS$.

The solid electrolyte included in the solid electrolyte layer 202 may include at least one selected from the group consisting of an oxide solid electrolyte, a polymer solid electrolyte, and a complex hydride solid electrolyte.

Examples which can be used as the oxide solid electrolyte include: NASICON solid electrolytes typified by $LiTi_2(PO_4)_3$ and element-substituted substances thereof; (LaLi)TiOs-based perovskite solid electrolytes; LISICON solid electrolytes typified by $Li_{14}ZnGe_4O_{16}$, $Li_4SiO_4$, and $LiGeO_4$ and element-substituted substances thereof; garnet solid electrolytes typified by $Li_7La_3Zr_2O_{12}$ and element-substituted substances thereof; $Li_3N$ and H-substituted substances thereof; $Li_3PO_4$ and N-substituted substances thereof; and glass and glass ceramics in which a material such as $Li_2SO_4$ or $Li_2CO_3$ has been added to a base material including a Li-B-O compound such as $LiBO_2$ or $Li_3BO_3$.

Examples which can be used as an oxide-based solid electrolyte include a lithium-containing metal oxide such as $Li_2O$-$SiO_2$ and $Li_2O$-$SiO_2$-$P_2O_5$, a lithium-containing metal nitride such as $Li_xP_yO_{1-z}N_z$, lithium phosphate ($Li_3PO_4$), and a lithium-containing transition metal oxide such as lithium titanium oxide.

Examples used as the oxide-based solid electrolyte include $Li_7La_3Zr_2O_{12}$(LLZ), $Li_{1.3}Al_{0.3}Ti_{1.7}(PO_4)_3$(LATP), and (La, Li)TiO_3(LLTO).

Examples which can be used as the polymer solid electrolyte include a compound of a polymer compound and a lithium salt. The polymer compound may have an ethylene oxide structure. Owing to having an ethylene oxide structure, the polymer compound can contain a large amount of lithium salt, thereby further increasing the ionic conductivity. Examples which can be used as the lithium salt include $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. As the lithium salt, one lithium salt selected from these may be used alone, or a mixture of two or more lithium salts selected from these may be used.

As the complex hydride solid electrolyte, $LiBH_4$-LiI or $LiBH_4$-$P_2S_5$ can be used, for example.

The solid electrolyte layer 202 may include only one solid electrolyte selected from the group of the solid electrolytes described above, or may include two or more solid electrolytes selected from the group of the solid electrolytes described above. The plurality of solid electrolytes have different compositions. The solid electrolyte layer 202 may include, for example, a halide solid electrolyte and a sulfide solid electrolyte.

The thickness of the solid electrolyte layer 202 may be 1 $\mu$m or more and 300 $\mu$m or less. In the case where the thickness of the solid electrolyte layer 202 is 1 $\mu$m or more, the negative electrode 201 and the positive electrode 203 are less likely to be short-circuited. In the case where the thickness of the solid electrolyte layer 202 is 300 $\mu$m or less, the battery 2000 can operate at a high power.

The positive electrode 203 contributes, as the counter electrode of the negative electrode 201, to the operations of the battery 2000.

The positive electrode 203 may include a material having properties of occluding and releasing metal ions (e.g., lithium ions), and includes, for example, a positive electrode active material. Examples which can be used as the positive electrode active material include a metal composite oxide, a transition metal fluoride, a polyanion material, a fluorinated polyanion material, a transition metal sulfide, a transition metal oxysulfide, and a transition metal oxynitride. In particular, in the case where the lithium-containing transition metal oxide is used as the positive electrode active material, it is possible to reduce the manufacturing cost and increase the average discharge voltage.

The metal composite oxide selected as the positive electrode active material included in the positive electrode 203 may include Li and at least one element selected from the group consisting of Mn, Co, Ni, and Al. Such materials include $Li(NiCoAl)O_2$, $Li(NiCoMn)O_2$, $LiCoO_2$, and the like. The positive electrode active material may be, for example, $Li(NiCoMn)O_2$.

The positive electrode 203 may include a solid electrolyte. According to the above configuration, the lithium-ion conductivity inside the positive electrode 203 can be increased, thereby enabling the battery 2000 to operate at a high power. As the solid electrolyte included in the positive electrode 203, the materials exemplified as the solid electrolyte included in the solid electrolyte layer 202 may be used.

The median diameter of particles of the active material included in the positive electrode 203 may be 0.1 $\mu$m or more and 100 $\mu$m or less. In the case where the median diameter of the particles of the active material is 0.1 $\mu$m or more, the particles of the active material and the solid electrolyte can form a favorable dispersion state. This enhances the charge capacity of the battery 2000. In the case where the median diameter of the particles of the active material is 100 $\mu$m or less, the diffusion rate of lithium in the particles of the active material is sufficiently ensured. This enables the battery 2000 to operate at a high power.

The median diameter of the particles of the active material may be larger than that of particles of the solid electrolyte. This enables formation of a favorable dispersion state of the active material and the solid electrolyte.

In the volume ratio "v: 100 - v" of the active material to the solid electrolyte included in the positive electrode 203, $30 \leq v \leq 95$ may be satisfied. In the case where $30 \leq v$ is satisfied, the energy density of the battery 2000 is sufficiently ensured. Furthermore, in the case where $v \leq 95$ is satisfied, the battery 2000 can operate at a high power.

The thickness of the positive electrode 203 may be 10 $\mu$m or more and 500 $\mu$m or less. In the case where the thickness of the positive electrode 203 is 10 $\mu$m or more, the energy density of the battery 2000 is sufficiently ensured. In the case where the thickness of the positive electrode 203 is 500 $\mu$m or less, the battery 2000 can operate at a high power.

The negative electrode 201 and the positive electrode 203 each may include one or more solid electrolytes for the purpose of increasing the ionic conductivity. As the solid electrolyte, the materials exemplified as the solid electrolyte included in the solid electrolyte layer 202 may be used.

At least one of the negative electrode 201, the solid electrolyte layer 202, and the positive electrode 203 may contain a binder for the purpose of enhancing the adhesion between particles. The binder is used to enhance the binding properties of the materials of the electrodes. Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrene-butadiene rubber, carboxymethylcellulose, and ethyl cellulose. Furthermore, as the binder can be used a copolymer of two or more materials selected from tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. Moreover, a mixture of two or more selected from these may be used as the binder. The binder may be a styrene ethylene butylene styrene block copolymer (SEBS), or may be maleic anhydride-modified hydrogenated SEBS.

At least one of the negative electrode 201 and the positive electrode 203 may contain a conductive additive for the purpose of increasing the electronic conductivity. Examples which can be used as the conductive additive include: graphites such as natural graphite and artificial graphite; carbon blacks such as acetylene black and Ketjenblack; conductive fibers such as a carbon fiber and a metal fiber; metal powders such as a fluorinated carbon powder and an aluminum powder; conductive whiskers such as a zinc oxide whisker and a potassium titanate whisker; conductive metal oxides such as titanium oxide; and conductive polymer compounds such as a polyaniline compound, a polypyrrole compound, and a polythiophene compound. Using a conductive carbon additive can seek cost reduction.

The battery 2000 of Embodiment 1 can be configured as batteries having various shapes such as a coin type, a cylindrical type, a prismatic type, a sheet type, a button type, a flat type, or a stacked type.

(Embodiment 2)

Embodiment 2 will be described below. The description overlapping that in Embodiment 1 above will be omitted as appropriate.

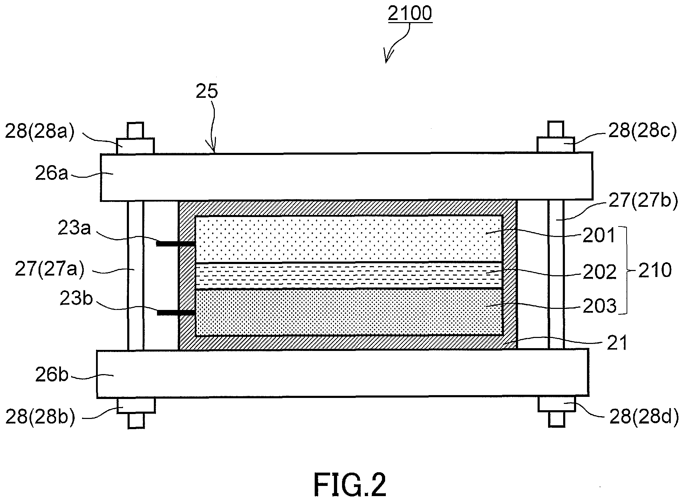

FIG. 2 is a cross-sectional view schematically showing the configuration of a battery 2100 of Embodiment 2.

The battery 2100 of Embodiment 2 further includes a confining member 25 in addition to the stack 210, which includes the negative electrode 201, the solid electrolyte layer 202, and the positive electrode 203.

The confining member 25 can confine the stack 210 to apply a confining pressure to the stack 210. The confining member 25 includes, for example, a pair of plate members 26a and 26b, a rod 27, and a fixing member 28.

The pair of plate members 26a and 26b are arranged, for example, in the stacking direction of the stack 210. The stack 210 is sandwiched between the pair of plate members 26a and 26b. The plate member 26a faces, for example, the negative electrode 201. The plate member 26b faces, for example, the positive electrode 203. The principal surfaces of the pair of plate members 26a and 26b respectively have areas larger than, for example, the principal surface of the negative electrode 201 and the principal surface of the positive electrode 203. In the present description, the term "principal surface" means a surface having the largest area of the member referred to. The confining member 25 can apply, by the pair of plate members 26a and 26b, the confining pressure to the stack 210 in the stacking direction of the stack 210.

In each of the pair of plate members 26a and 26b, an opening is formed into which the rod 27 is screwable, for example. The opening of the plate member 26a and the opening of the plate member 26b are arranged in, for example, the stacking direction of the stack 210.

The rod 27 extends in the stacking direction of the stack 210. The rod 27 is screwed into each of the opening of the plate member 26a and the opening of the plate member 26b. The rod 27 functions as the fastener for fastening the plate member 26a and the plate member 26b. In the side surface of the rod 27, an external screw portion may be formed. A specific example of the rod 27 is a bolt.

The confining member 25 may have a plurality of rods 27. The number of the rods 27 in the confining member 25 is not particularly limited, and is, for example, 1 or more and 40 or less. In FIG. 2, the confining member 25 has four rods 27. In detail, the plate members 26a and 26b are rectangular in plan view, and the four rods 27 are each screwed into the openings near the corners of the plate members 26a and 26b. In FIG. 2, two rods 27a and 27b among the four rods 27 are shown for description.

The fixing member 28 fixes, for example, one plate member of the plate members 26a and 26b and the rod 27 to each other. The fixing member 28 has, for example, an internal screw portion that is screwable with the rod 27. A specific example of the fixing member 28 is a nut.

The confining member 25 has, for example, a plurality of fixing members 28. In an example, two fixing members 28 are attached to one rod 27. The plate members 26a and 26b are sandwiched between the two fixing members 28. By adjusting the positions of the two fixing members 28, a load can be applied to each of the plate members 26a and 26b in a direction in which the plate members 26a and 26b approach each other. Thus, it is possible to apply the confining pressure to the stack 210.

Among eight fixing members 28 included in the confining member 25, four fixing members 28a, 28b, 28c, and 28d are shown in FIG. 2. The fixing members 28a and 28b are each attached to the rod 27a. The plate members 26a and 26b are sandwiched between the fixing members 28a and 28b. The fixing members 28c and 28d are each attached to the rod 27b. The plate members 26a and 26b are sandwiched between the fixing members 28c and 28d.

The confining member 25 may further include a sensor for measuring the confining pressure applied to the stack 210. The sensor is positioned, for example, between the stack 210 and one plate member of the plate members 26a and 26b.

The confining pressure applied to the stack 210 by the confining member 25 is not particularly limited, and is, for example, 10 MPa or more and 200 MPa or less. The confining pressure may be 10 MPa or more and 50 MPa or less, or may be 30 MPa or more and 50 MPa or less. Applying the confining pressure to the stack 210 by the confining member 25 tends to enable suppression of a contact failure caused by expansion and contraction of the active material. The contact failure can occur, for example, between the active materials or between the active material and a current collector. Applying the confining pressure to the stack 210 tends to enable enhancement of the cycle characteristics of the battery 2100.

The battery 2100 may further include a case 21 and lead wires 23a and 23b.

The case 21 houses the stack 210. The case 21 is positioned, for example, between the stack 210 and the confining member 25. The case 21 can prevent the stack 210 from being in direct contact with the confining member 25. The case 21 is formed of, for example, an aluminum laminated film.

The lead wire 23a is electrically connected to the negative electrode 201. The lead wire 23b is electrically connected to the positive electrode 203. The lead wires 23a and 23b each extend to the outside of the case 24. In an example, the lead wire 23a is formed of nickel. The lead wire 23b is formed of aluminum.

Examples

The present disclosure will be described in detail below with reference to examples and comparative examples. The present disclosure is not limited to the following examples.

1. Production of solid electrolyte

$Li_2S$ and $P_2S_5$ were weighed in the molar ratio of $Li_2S$: $P_2S_5$ = 75: 25, and pulverized and mixed in a mortar. Next, a mechanical milling process was performed at 510 rpm for 10 hours with a planetary ball mill. Thus, a glassy sulfide solid electrolyte was obtained.

2. Production of negative electrode

(1) Production of negative electrode including solid electrolyte

First, as a negative electrode active material, graphite particles having a median diameter of 8 $\mu$m and spherical zinc particles having a median diameter of 4.5 $\mu$m (product number 000-87575 manufactured by Kishida Chemical Co., Ltd.) were prepared. The median diameters of the graphite particles and the zinc particles were measured with a laser diffraction particle size analyzer (SALD-2000 manufactured by Shimadzu Corporation). Oxide coating films have been formed on the zinc particles. The content of oxygen in the zinc particles was 0.7 mass%. The content of oxygen in the zinc particles was measured by an inert gas fusion method with EMGA-830 manufactured by HORIBA, Ltd.

Next, negative electrode active materials e1 to e5 were produced which had different mass ratios of the graphite particles to the zinc particles. The mass ratios of the graphite particles to the zinc particles in the negative electrode active materials e1 to e5 were respectively 100: 0, 80: 20, 60: 40, 40: 60, and 0: 100.

Next, the negative electrode active materials e1 to e5 were each mixed with the solid electrolyte such that the volume ratio of the negative electrode active material to the solid electrolyte was 70: 30. Thus, mixtures m1 to m5 were obtained. The above volume ratio was calculated from the true specific gravities of the graphite particles, the zinc particles, and the solid electrolyte. The true specific gravity of the graphite particles was 2.2 g/cm³. The true specific gravity of the zinc particles was 7.1 g/cm³. The true specific gravity of the solid electrolyte was 1.9 g/cm³. The mass ratios of the negative electrode active material to the solid electrolyte in the mixtures m1 to m5 were respectively 73: 27, 76: 24, 79: 21, 82: 18, and 90: 10.

Next, a binder and a dispersion medium were added to each of the mixtures m1 to m5, and these were kneaded. The binder used was maleic anhydride-modified hydrogenated SEBS (M1913 manufactured by Asahi Kasei Corporation). Thus, negative electrode mixture slurries s1 to s5 were obtained. In the negative electrode mixture slurries s1 to s5, the ratio of the sum of the mass of the negative electrode active material and the mass of the solid electrolyte to the mass of the binder was 99: 1.

Next, the negative electrode mixture slurries s1 to s5 were each applied onto a negative electrode current collector. The negative electrode current collector used was a copper foil having a thickness of 10 $\mu$m. The resultant coating films were dried at 100°C to obtain negative electrodes a1 to a5. The negative electrodes a1 to a5 each had the negative electrode current collector and a negative electrode mixture layer formed from the negative electrode mixture slurry.

[Evaluation of filling density of negative electrode mixture layer]

Next, the filling density of the negative electrode mixture layer was measured for the case where the negative electrodes a1 to a5 are each used to produce an all-solid-state battery. In detail, first, the negative electrodes a1 to a5 were each pressed at 600 MPa with a flat-plate pressing machine. Next, the filling density of the negative electrode mixture layer included in each of the pressed negative electrodes a1 to a5 was measured. The filling density of the negative electrode mixture layer was calculated by dividing the mass of the negative electrode mixture layer by the volume of the negative electrode mixture layer. The results are shown in Table 1. Furthermore, the filling rates of the negative electrode mixture layer in the negative electrodes a1 to a5 were respectively 85%, 71%, 67%, 62%, and 63%. As can be seen from the results, the higher mass ratio of zinc the negative electrode mixture layer had, the lower filling rate the negative electrode mixture layer tended to have. As described above, the filling rate is the ratio of the bulk density of the negative electrode mixture layer to the true density of the negative electrode mixture layer. The true density of the negative electrode mixture layer was calculated from the mass ratio of graphite, zinc, the solid electrolyte, and the binder, which constituted the negative electrode mixture layer and their true specific gravities. The true specific gravity of the binder was 0.9 g/cm$^3$.

[Table 1]

| | Mass ratio of graphite to zinc (%) | | Mass ratio of active material to solid electrolyte (%) | | Filling density (g/cm$^3$) |
|---|---|---|---|---|---|
| | Graphite | Zinc | Active material | Solid electrolyte | |
| Negative electrode a1 | 100 | 0 | 73 | 27 | 1.8 |
| Negative electrode a2 | 80 | 20 | 76 | 24 | 2.0 |
| Negative electrode a3 | 60 | 40 | 79 | 21 | 2.4 |
| Negative electrode a4 | 40 | 60 | 82 | 18 | 2.8 |
| Negative electrode as | 0 | 100 | 90 | 10 | 4.1 |

(2) Production of negative electrode free of solid electrolyte

First, as a negative electrode active material, the graphite particles and the zinc particles described above in the section (1) were prepared. Next, negative electrode active materials e6 to e9 were produced which had different mass ratios of the graphite particles to the zinc particles. The mass ratios of the graphite particles to the zinc particles in the negative electrode active materials e6 to e9 were respectively 100: 0, 90: 10, 70: 30, and 50: 50.

Next, a binder and a dispersion medium were added to each of the negative electrode active materials e6 to e9, and these were kneaded. The binder used was polyvinylidene fluoride (PVDF). The dispersion medium used was N-methylpyrrolidone (NMP). Thus, negative electrode mixture slurries s6 to s9 were obtained. In the negative electrode mixture slurries s6 to s9, the mass ratio of the negative electrode active material to the binder was 90: 10.

Next, the negative electrode mixture slurries s6 to s9 were each applied onto a negative electrode current collector. The negative electrode current collector used was a copper foil having a thickness of 10 $\mu$m. The resultant coating film was dried at 80°C and rolled with a roller to obtain negative electrodes b1 to b4. The negative electrodes b1 to b4 each had the negative electrode current collector and a negative electrode mixture layer formed from the negative electrode mixture slurry.

In the rolling process with the roller, the conditions were appropriately adjusted for each of the negative electrodes b1 to b4 such that the filling rate of the negative electrode mixture layer was almost constant within the range of 85% or more and 90% or less. As described above, the filling rate is the ratio of the bulk density of the negative electrode mixture layer to the true density of the negative electrode mixture layer. The true density of the negative electrode mixture layer was calculated from the mass ratio of graphite, zinc, and the binder, which constituted the negative electrode mixture layer and their true specific gravities. The true specific gravity of the binder was 1.8 g/cm$^3$.

[Evaluation of filling density of negative electrode mixture layer]

Next, the filling density of the negative electrode mixture layer was measured for the negative electrodes b1 to b4. The filling density of the negative electrode mixture layer was calculated by dividing the mass of the negative electrode mixture layer by the volume of the negative electrode mixture layer. The results are shown in Table 2.

[Table 2]

| | Mass ratio of graphite to zinc (%) | | Filling density (g/cm$^3$) |
|---|---|---|---|
| | Graphite | Zinc | |
| Negative electrode b1 | 100 | 0 | 1.9 |

(continued)

| | Mass ratio of graphite to zinc (%) | | Filling density (g/cm$^3$) |
|---|---|---|---|
| | Graphite | Zinc | |
| Negative electrode b2 | 90 | 10 | 2.1 |
| Negative electrodeb3 | 70 | 30 | 2.4 |
| Negative electrodeb4 | 50 | 50 | 2.7 |

3. Evaluation 1 of charge and discharge characteristics

(1) Evaluation of all-solid-state battery

[Production of battery]

By the following method, all-solid-state batteries A1 to A5 were produced which respectively had the negative electrodes a1 to a5 as the working electrode and had a lithium-indium alloy layer as the counter electrode.

First, 80 mg of the solid electrolyte was weighed and put into an insulating cylinder. The insulating cylinder had an inner diameter portion with a cross-sectional area of 0.7 cm$^2$. The solid electrolyte inside the insulating cylinder was pressure-molded at a pressure of 50 MPa. Next, the negative electrode was punched out to have the same size as the inner diameter portion of the insulating cylinder. The negative electrode was disposed on one surface of the solid electrolyte such that the negative electrode mixture layer of the negative electrode was in contact with the solid electrolyte. Next, the negative electrode and the solid electrolyte were pressure-molded at a pressure of 600 MPa to produce a stack composed of the negative electrode and a solid electrolyte layer. Next, metallic indium, metallic lithium, and metallic indium were disposed in this order on the solid electrolyte layer of the stack. The thickness of the metallic indium was 200 $\mu$m. The area of the principal surface of the metallic indium was 0.66 cm$^2$. The thickness of the metallic lithium was 300 $\mu$m. The area of the principal surface of the metallic lithium was 0.58 cm$^2$. Thus, a stack was produced which had a three-layer structure of the negative electrode, the solid electrolyte layer, and the indium-lithium-indium layer.

Next, both end surfaces of the stack having a three-layer structure were sandwiched with stainless steel pins. Furthermore, a confining pressure of 150 MPa was applied to the stack with bolts. The pins and the bolts functioned as the confining member. Thus, the all-solid-state batteries A1 to A5 were obtained which respectively had the negative electrodes a1 to a5 as the working electrode and had the lithium-indium alloy layer as the counter electrode.

Table 3 shows the theoretical capacities of the negative electrodes a1 to a5 respectively included in the batteries A1 to A5. The theoretical capacity of the negative electrode means the capacity per unit area of the negative electrode. The theoretical capacity of the negative electrode can be calculated from the mass of graphite, the mass of zinc, the theoretical capacity density per unit mass of graphite, and the theoretical capacity density per unit mass of zinc in the negative electrode mixture layer.

[Charge and discharge test]

The batteries A1 to A5 were charged at room temperature at a constant current of 0.05 C rate (20-hour rate). The charge of the battery was performed until the potential of the working electrode reached -0.615 V with reference to the counter electrode. Next, discharge of the battery was performed until the potential reached 0.4 V. In this operation, the charge means reduction of the working electrode. The discharge means oxidation of the working electrode.

As for the batteries A1 to A5, Table 3 shows the ratio of the initial charge capacity of the battery to the theoretical capacity of the negative electrode, the initial charge and discharge efficiency, and the discharge capacity density. In Table 3, the initial charge and discharge efficiency is the ratio of the initial discharge capacity to the initial charge capacity. The discharge capacity density means the initial discharge capacity per volume of the negative electrode mixture layer before the charge and discharge test. The discharge capacity density in Table 3 is the value obtained by normalizing, as 100, the discharge capacity density of the battery A1 that was free of zinc as the negative electrode active material.

Next, the above charge and discharge test was performed for another 29 cycles. That is, the charge and discharge test was performed for 30 cycles in total. Table 3 shows the capacity retention ratio of the battery in the 20th cycle and the capacity retention ratio of the battery in the 30th cycle. The capacity retention ratio means the ratio of, to the initial discharge capacity, the discharge capacity of the battery after a specific number of cycles of the charge and discharge test.

After the above charge and discharge test, the batteries A1 to A5 were charged at room temperature at a constant current of 0.3 C rate (10/3-hour rate). The charge of the battery was performed until the potential of the working electrode reached -0.615 V with reference to the counter electrode. Table 3 shows the ratio of the charge capacity of the battery at 0.3 C rate to the charge capacity of the battery at 0.05 C rate in the 30th cycle of the charge and discharge test. In the present description, "the ratio of the charge capacity of the battery at 0.3 C rate to the charge capacity of the battery at 0.05 C rate in the 30th cycle of the charge and discharge test" is referred to also as "0.3 C/0.05 C charge capacity ratio".

(2) Evaluation on three-electrode battery having no solid electrolyte layer

[Production of battery]

Three-electrode batteries B1 to B4 were produced which respectively had the negative electrodes b1 to b4 as the working electrode and had no solid electrolyte layer. In the three-electrode battery, metallic lithium was used as the counter electrode and the reference electrode. In the three-electrode battery, an electrolyte solution was used as the medium capable of conducting lithium ions.

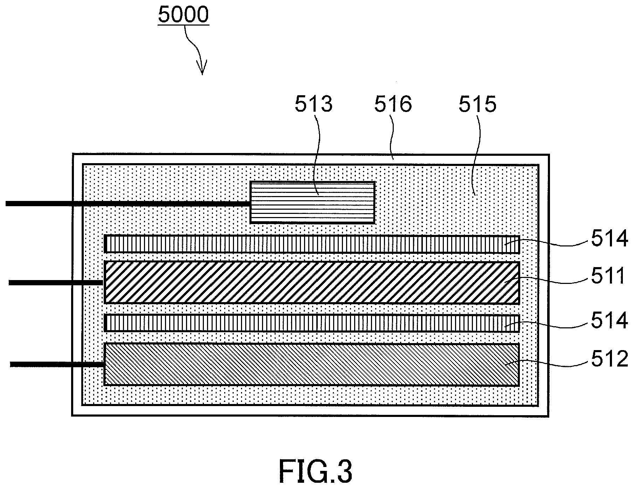

FIG. 3 is a cross-sectional view schematically showing the configuration of a three-electrode battery. As shown in FIG. 3, a three-electrode battery 5000 included a working electrode 511, a counter electrode 512, a reference electrode 513, two separators 514, an electrolyte solution 515, and a case 516. The working electrode 511, the counter electrode 512, and the reference electrode 513 were immersed in the electrolyte solution 515. The reference electrode 513, the working electrode 511, and the counter electrode 512 were arranged in this order. One of the two separators 514 was positioned between the working electrode 511 and the counter electrode 512. The other separator 514 was positioned between the working electrode 511 and the reference electrode 513. The case 516 housed the working electrode 511, the counter electrode 512, the reference electrode 513, the two separators 514, and the electrolyte solution 515.

The working electrode 511 was produced by the following method. First, the negative electrode was cut to have a size of 20 mm × 20 mm. A lead wire was attached to this negative electrode and these were dried under vacuum at 110°C for 2 hours. The lead wire was formed of nickel. Thus, the working electrode 511 was obtained.

Metallic lithium was used for the counter electrode 512 and the reference electrode 513. The separators 514 were formed of polyethylene. The electrolyte solution 515 included a mixed solvent of ethylene carbonate and ethyl methyl carbonate and included lithium hexafluorophosphate ($LiPF_6$). The volume ratio of ethylene carbonate to ethyl methyl carbonate in the mixed solvent was 3: 7. The concentration of $LiPF_6$ in the electrolyte solution 515 was 1 mol/liter. The case 516 was formed of an aluminum laminated film.

Table 3 shows the theoretical capacities of the negative electrodes b1 to b4 respectively included in the batteries B1 to B4.

[Charge and discharge test]

The batteries B1 to B4 were charged at room temperature at a constant current of 0.25 mA/cm². The charge of the battery was performed until the potential of the working electrode reached 0 V with reference to the reference electrode. Next, discharge of the battery was performed until the potential reached 1 V. Next, this charge and discharge test was performed for another 29 cycles. That is, the charge and discharge test was performed for 30 cycles in total.

As for the batteries B1 to B4, Table 3 shows the ratio of the initial charge capacity of the battery to the theoretical capacity of the negative electrode, the initial charge and discharge efficiency, the discharge capacity density, the capacity retention ratio of the battery in the 20th cycle, and the capacity retention ratio of the battery in the 30th cycle. The discharge capacity density in Table 3 is the value obtained by normalizing, as 100, the discharge capacity density of the battery B1 that was free of zinc in the negative electrode active material.

[Observation of negative electrode after charge and discharge test]

The batteries B1 to B4 after the charge and discharge test were disassembled, and the state of the negative electrode was observed. In the batteries B1 to B4, no detachment of the negative electrode mixture layer from the electrode plate was confirmed.

[Table 3]

| Working electrode | | Theoretical capacity (mAh/cm²) | Initial charge capacity /theoretical capacity (%) | Initial charge and discharge efficiency (%) | Discharge capacity density (mAh/cm³) (*1) | 20th cycle capacity retention ratio (%) | 30th cycle capacity retention ratio (%) | 0.3C/0.05C charge capacity ratio (%) |
|---|---|---|---|---|---|---|---|---|
| Battery A1 (all-solid-state) | Negative electrode a1 | 5.1 | 100 | 94 | 100 | 100 | 100 | 70 |
| Battery A2 (all-solid-state) | Negative electrode a2 | 4.8 | 98 | 89 | 105 | 101 | 101 | 82 |
| Battery A3 (all-solid-state) | Negative electrode a3 | 5.0 | 98 | 78 | 113 | 102 | 101 | 75 |
| Battery A4 (all-solid-state) | Negative electrode a4 | 4.9 | 95 | 70 | 112 | 103 | 102 | 63 |
| Battery A5 (all-solid-state) | Negative electrode a5 | 4.8 | 96 | 53 | 160 | 98 | 100 | 21 |
| Battery B1 (electrolyte solution) | Negative electrode b1 | 2.8 | 100 | 95 | 100 | 99 | 95 | - |
| Battery B2 (electrolyte solution) | Negative electrode b2 | 2.8 | 96 | 88 | 106 | 96 | 95 | - |
| Battery B3 (electrolyte solution) | Negative electrode b3 | 2.9 | 93 | 80 | 112 | 85 | 83 | - |
| Battery B4 (electrolyte solution) | Negative electrode b4 | 2.9 | 90 | 71 | 128 | 65 | 63 | - |

(*1) Value obtained by normalizing, as 100, discharge capacity density of battery free of zinc as negative electrode active material

As shown in Table 3, the batteries A1 to A5 had initial charge capacities that were respectively almost equal to the theoretical capacities of the negative electrodes a1 to a5. As for the batteries A1 to A5, the higher the mass ratio of zinc included in the negative electrode active material was, the lower initial charge and discharge efficiency the battery tended to have.

Assume that graphite and zinc in the negative electrode active material respectively have a charge and discharge efficiency of 94% and a charge and discharge efficiency of 60%. In this case, the calculated values for the charge and discharge efficiency of the batteries A2 to A5 are respectively 87%, 80%, 73%, and 60%, which are almost equal to their measured values in Table 3. The assumed value for the charge and discharge efficiency of graphite is equal to the initial charge and discharge efficiency of the battery A1. The assumed value for the charge and discharge efficiency of zinc is equal to the charge and discharge efficiency of a battery including a negative electrode active material consisting of zinc that is exhibited at the time when zinc that has occluded lithium changes in composition from LiZn to $Li_{0.4}Zn$ during discharge of the battery.

The above results presume, as for the batteries A2 to A5, that during discharge of the battery, the reaction rate decreased after the composition of the lithium-zinc alloy reached $Li_{0.4}Zn$. That is, it is presumed, as for the batteries A2 to A5, that the discharge was ended while lithium equivalent to the composition of $Li_{0.4}Zn$ was occluded inside zinc.

The batteries A2 to A5 tended to have lower initial charge and discharge efficiencies than the battery A1. However, the batteries A2 to A5 had enhanced discharge capacity densities due to the negative electrode mixture layer with a small thickness.

The batteries A2 to A4 had at least three times as high 0.3 C/0.05 C charge capacity ratios as the battery A5. In particular, the batteries A2 and A3 had more excellent 0.3 C/0.05 C charge capacity ratios than the battery A1.

When the negative electrode active material expands during charge of the battery, a pressure is applied to the battery element in a direction in which the battery element is compressed, and accordingly voids inside the negative electrode mixture layer tend to decrease. It is considered, as for the batteries A2 to A3, that the zinc particles expanded during charge of the battery and accordingly the joined state at solid-solid interfaces in the negative electrode mixture layer was improved. This is presumed to have enhanced the 0.3 C/0.05 C charge capacity ratio of the batteries A2 to A3.

As for the batteries A1 to A5, the capacity retention ratio after 30 cycles of the charge and discharge test was 100% or more. In particular, the batteries A2 to A4 exhibited a high capacity retention ratio, where the ratio of the mass of zinc to the sum of the mass of graphite and the mass of zinc in the negative electrode was 10 mass% or more and 60 mass% or less. In contrast, as for the batteries B1 to B4, as the ratio of the mass of zinc in the negative electrode active material increased, the capacity retention ratio after 30 cycles of the charge and discharge test decreased to 95% to 63%. The above results indicate that the batteries, which include a mixture of graphite and zinc in an appropriately adjusted mass ratio as the negative electrode active material, can achieve more favorable cycle characteristics by using a solid electrolyte than by using an electrolyte solution as the medium for conducting lithium ions.

In the charge and discharge test for the batteries B2 to B4, the capacity decreased during charge and discharge cycles from the initial to 20th cycles, and the capacity was retained from the 20th to 30th cycles. As for the batteries B2 to B4, a trial calculation can be performed by the following equations (1) and (2) for the discharge capacity of graphite and the discharge capacity of zinc in the initial charge and discharge test. Based on the results of the calculation by the following equations (1) and (2), the ratio of the discharge capacity of zinc to the entire discharge capacity was calculated. The ratios of the discharge capacity of zinc to the entire discharge capacity in the batteries B2 to B4 were respectively 6%, 17%, and 35%. This ratio was almost equal to the decrease rate of the capacity after 20 cycles of the charge and discharge test. The results presume, as for the batteries B2 to B4, that zinc became disabled to contribute to the charge and discharge during the charge and discharge cycles from the initial to 20th cycles of the charge and discharge test. In other words, it is presumed, as for the batteries B2 to B4, that only graphite contributed to the charge and discharge during the charge and discharge cycles from the 20th to 30th cycles of the charge and discharge test.

$$\text{Discharge capacity of graphite} = \text{theoretical capacity of graphite} \times \text{charge and discharge efficiency of graphite} \quad \text{Equation (1)}$$

$$\text{Discharge capacity of zinc} = \text{theoretical capacity of zinc} \times \text{utilization rate of zinc} \times \text{charge and discharge efficiency of zinc} \quad \text{Equation (2)}$$

In the above equation (1), the charge and discharge efficiency of graphite is equal to the initial charge and discharge efficiency of the battery B1. In the equation (2), the utilization rate of zinc is the ratio of the initial charge capacity of the battery to the theoretical capacity of the negative electrode. The charge and discharge efficiency of zinc is 60%. The charge and discharge efficiency of zinc is calculated on the assumption that, during discharge of the battery, zinc that has occluded lithium changes in composition from LiZn to $Li_{0.4}Zn$. From the results for the batteries A1 and B1, the utilization rate of graphite is assumed to be 100% in Equation (1).

In a battery including zinc as a negative electrode active material, expansion and contraction of the active material might cause a contact failure between the active materials or a contact failure between the active material and a current collector. This causes concern for deterioration in cycle characteristics of the battery due to these contact failures. However, as for the batteries B2 to B4, the occurrence of the above contact failure is considered to cause a contact failure not only for zinc but also for graphite. Thus, as for the batteries B2 to B4, it is unlikely that a contact failure caused by repeated charge and discharge cycles decreases only the contribution of zinc to the charge and discharge. Furthermore, in the negative electrodes of the batteries B2 to B4 after the charge and discharge test, detachment of the negative electrode mixture layer from the electrode plate was not observed.

As for the batteries B2 to B4, the following factors are considered to have accounted for the decrease in capacity retention ratio with the increase in mass ratio of zinc in the negative electrode active material. (1) Expansion and contraction of the negative electrode active material caused a contact failure between the active materials or a contact failure between the active material and the current collector. (2) A side reaction between zinc and the electrolyte solution generated a high-resistance region containing lithium oxide or the like on the surface of zinc or inside zinc. It is presumed, as for the batteries B2 to B4, that zinc became disabled to contribute to the charge and discharge due to the above high-resistance region.

Compared to this, it is presumed, as for the batteries A2 to A5, that a side reaction between zinc and the electrolyte hardly occurred because of no use of electrolyte solution. Furthermore, as for the batteries A2 to A5, a high confining pressure was applied to the battery element. Thus, it is presumed, as for the batteries A2 to A5, that a contact failure between the active materials and a contact failure between the active material and the current collector caused by the expansion and contraction of the negative electrode active material were sufficiently suppressed. Based on the above, it is presumed that the batteries A2 to A5 had more excellent cycle characteristics than the batteries B2 to B4.

4. Evaluation 2 of charge and discharge characteristics

By the following method, all-solid-state secondary batteries C1 to C4 were produced by using the negative electrode a1 and all-solid-state secondary batteries D1 to D3 were produced by using the negative electrode a3.

(1) Production of positive electrode

First, as a positive electrode active material, particles were prepared, each of which had a core formed of $Li(NiCoMn)O_2$ and a coating layer formed of LiNbOs. In the particle, the core was coated with the coating layer. The median diameter of the particles was 5 $\mu$m. The median diameter of the particles was measured with a laser diffraction particle size analyzer (SALD-2000 manufactured by Shimadzu Corporation).

Next, a solid electrolyte was added to the positive electrode active material such that the mass ratio of the positive electrode active material to the solid electrolyte was 85: 15. Next, to the resultant mixture, a binder and a dispersion medium were further added and these were kneaded. The binder used was maleic anhydride-modified hydrogenated SEBS. Thus, a positive electrode mixture slurry was obtained. In the positive electrode mixture slurry, the ratio of the sum of the mass of the positive electrode active material and the mass of the solid electrolyte to the mass of the binder was 98: 2.

Next, this positive electrode mixture slurry was applied onto a positive electrode current collector. The positive electrode current collector used was an aluminum foil having a thickness of 15 $\mu$m. The resultant coating film was dried at 100°C to obtain a positive electrode. The positive electrode had a positive electrode current collector and a positive electrode mixture layer formed from the positive electrode mixture slurry. In detail, positive electrodes c1 and c2 of two types were produced by the above operation. The positive electrodes c1 and c2 differed from each other in thickness of the positive electrode mixture layer.

(2) Production of solid electrolyte layer

First, a binder and a dispersion medium were added to a solid electrolyte, and these were kneaded. The binder used was maleic anhydride-modified hydrogenated SEBS. Thus, a solid electrolyte mixture slurry was obtained. In the solid electrolyte mixture slurry, the ratio of the mass of the solid electrolyte to the mass of the binder was 100: 2.

Next, the solid electrolyte mixture slurry was applied onto the negative electrode a1 and the negative electrode a3. The resultant coating films were dried at 100°C to obtain a stack t1 composed of the negative electrode a1 and a solid electrolyte layer and a stack t2 composed of the negative electrode a3 and a solid electrolyte layer.

(3) Production of battery

First, the positive electrode c1 and the positive electrode c2 were respectively stacked with the stack t1 and the stack t2 such that the positive electrode mixture layer of the positive electrode was in contact with the solid electrolyte layer. Next, the resultant stacks were pressed at a pressure of 600 MPa to obtain stacks each having a three-layer structure including the positive electrode, the negative electrode, and the solid electrolyte layer. In detail, a stack t3 including the positive electrode c1, the negative electrode a1, and the solid electrolyte layer and a stack t4 including the positive electrode c2, the negative electrode a3, and the solid electrolyte layer were obtained. In the stacks, the solid electrolyte layer was positioned between the positive electrode and the negative electrode.

Next, the stack t3 was used to produce the battery C1 having the same structure as that of the battery 2100 shown in FIG. 2. The battery C1 had a case formed of an aluminum laminated film. The lead wire connected to the positive electrode was formed of aluminum. The lead wire connected to the negative electrode was formed of nickel. The positive electrode and the negative electrode each had a principal surface with an area of 2.3 cm$^2$. In the battery C1, no confining pressure was applied to the stack t3.

In the battery C1, the thickness of the positive electrode mixture layer was approximately 80 $\mu$m. The capacity per unit area of the positive electrode was 4.3 mAh/cm$^2$. The thickness of the negative electrode mixture layer was approximately 113 $\mu$m. The theoretical capacity per unit area of the negative electrode was 1.2 times the capacity per unit area of the positive electrode. The thickness of the solid electrolyte layer was approximately 50 $\mu$m.

Next, the batteries C2 to C4 were produced by the same method as that of the battery C1 except that the confining pressure shown in Table 4 was applied to the stack t3. Furthermore, the batteries D1 to D3 were produced by the same method as that of the battery C1 except that the stack t4 was used instead of the stack t3 and the confining pressure shown in Table 4 was applied to the stack t4.

In the batteries D1 to D3, the thickness of the positive electrode mixture layer was approximately 94 $\mu$m. The capacity per unit area of the positive electrode was 5.2 mAh/cm$^2$. The thickness of the negative electrode mixture layer was approximately 87 $\mu$m. The theoretical capacity per unit area of the negative electrode was 1.2 times the capacity per unit area of the positive electrode. The thickness of the solid electrolyte layer was approximately 50 $\mu$m.

The batteries D1 to D3 differed from the batteries C1 to C4 in terms of capacity per unit area of the positive electrode and the negative electrode. However, as shown in Table 3, the negative electrode a3 had a lower initial charge and discharge efficiency than the negative electrode a1. The batteries D1 to D3 were almost equal to the batteries C1 to C4 in terms of discharge capacity in the initial charge and discharge test.

(4) Charge and discharge test

First, a charge and discharge test 1 was performed for the batteries C1 to C4 and the batteries D1 to D3. In the charge and discharge test 1, the batteries were charged at room temperature at a constant current of 0.05 C rate. The charge of the battery was performed until the voltage of the battery reached 4.2 V. Next, discharge of the battery was performed until the voltage reached 2.5 V.

As for the batteries C1 to C4 and the batteries D1 to D3, Table 4 shows the discharge capacity at 0.05 C rate in the initial charge and discharge test 1. The discharge capacity at 0.05 C rate in Table 4 is the value obtained by normalizing, as 100, the discharge capacity of the battery C1 in which only graphite was included as the negative electrode active material and no confining pressure was applied to the stack.

Next, the above charge and discharge test 1 was performed for another four cycles. That is, the charge and discharge test 1 was performed for five cycles in total. Next, a charge and discharge test 2 was further performed for the batteries. In the charge and discharge test 2, the batteries were charged at a constant current of 0.3 C rate. The charge of the battery was performed until the voltage of the battery reached 4.2 V. Furthermore, the battery was charged until the current value reached a value of 0.05 C rate in a state where the voltage of the battery was maintained at 4.2 V. Next, the battery was discharged at a constant current of 0.3 C rate. The discharge of the battery was performed until the voltage of the battery reached 2.5 V. The charge and discharge test 2 was performed for 195 cycles. That is, the charge and discharge tests 1 and 2 for the battery were performed for 200 cycles in total.

As for the batteries C1 to C4 and the batteries D1 to D3, Table 4 shows the discharge capacity at 0.3 C rate in the initial charge and discharge test 2. In Table 4, the discharge capacity means the capacity per mass of the positive electrode active material in the battery. The discharge capacity at 0.3 C rate in Table 4 is the value obtained by normalizing, as 100, the discharge capacity of the battery C1 at 0.05 C rate. Table 4 further shows the ratio of the discharge capacity of the battery at 0.3 C rate in the initial charge and discharge test 2 to the discharge capacity of the battery at 0.05 C rate in the initial charge and discharge test 1. In the present description, "the ratio of the discharge capacity of the battery at 0.3 C rate in the initial charge and discharge test 2 to the discharge capacity of the battery at 0.05 C rate in the initial charge and discharge test 1" is referred to also as "0.3 C/0.05 C discharge capacity ratio".

Table 4 further shows, as the capacity retention ratio, the ratio of the discharge capacity at 0.3 C rate in the 195th cycle of the charge and discharge test 2 to the discharge capacity at 0.3 C rate in the initial charge and discharge test 2. As for the battery C1, the discharge capacity greatly decreased along with the repeated charge and discharge cycles. Accordingly, the charge and discharge test for the battery C1 was terminated before the total number of performed cycles of the charge and discharge tests 1 and 2 reached 200. In Table 4, the capacity retention ratio of the battery C1 after a total of 50 cycles of the charge and discharge tests 1 and 2 is shown. That is, the capacity retention ratio of the battery C1 in Table 4 means the ratio of the discharge capacity at 0.3 C rate in the 45th cycle of the charge and discharge test 2 to the discharge capacity at 0.3 C rate in the initial charge and discharge test 2.

[Table 4]

| | Negative electrode | Confining pressure (MPa) | Discharge capacity (mAh/g) (*1) | | 0.3 C/0.05 C discharge capacity ratio (%) | Capacity retention ratio (%) |
| --- | --- | --- | --- | --- | --- | --- |
| | | | 0.05 C | 0.3 C | | |
| Battery C1 (all-solid-state) | Negative electrode a1 | 0 | 100 | 59 | 59 | 64 (*2) |
| Battery C2 (all-solid-state) | Negative electrode a1 | 10 | 101 | 72 | 71 | 75 |
| Battery C3 (all-solid-state) | Negative electrode a1 | 30 | 105 | 76 | 72 | 80 |
| Battery C4 (all-solid-state) | Negative electrode a1 | 50 | 107 | 82 | 77 | 79 |
| Battery D1 (all-solid-state) | Negative electrode a3 | 10 | 72 | 62 | 86 | 86 |
| Battery D2 (all-solid-state) | Negative electrode a3 | 30 | 88 | 81 | 92 | 83 |
| Battery D3 (all-solid-state) | Negative electrode a3 | 50 | 85 | 85 | 100 | 86 |
| (*1) Capacity per unit mass of positive electrode active material that is value obtained by normalizing, as 100, discharge capacity of battery C1 at 0.05 C rate (*2) Capacity retention ratio after total of 50 cycles of charge and discharge tests 1 and 2 | | | | | | |

As can be seen from Table 4, the batteries D1 to D3, which had the negative electrode a3 in which the ratio of the mass of zinc to the sum of the mass of graphite and the mass of zinc was 10 mass% or more and 60 mass% or less, exhibited more excellent capacity retention ratios than the batteries C1 to C4. In particular, the discharge capacities of the batteries D2 and D3 at a 0.3 C rate were respectively higher than those of the batteries C3 and C4. The confining pressures applied to the batteries D2 and D3 were respectively equal to those applied to the batteries C3 and C4.

INDUSTRIAL APPLICABILITY

The battery of the present disclosure can be utilized, for example, as an all-solid-state secondary battery.

**Claims**

1. A battery comprising:

a positive electrode;

a negative electrode including graphite and zinc; and
a solid electrolyte layer positioned between the positive electrode and the negative electrode, wherein
a ratio of a mass of zinc to a sum of a mass of graphite and the mass of zinc in the negative electrode is 10 mass% or more and 60 mass% or less.

2. The battery according to claim 1, wherein
   the ratio is 20 mass% or more and 40 mass% or less.

3. The battery according to claim 1 or 2, further comprising:

   a stack including the positive electrode, the negative electrode, and the solid electrolyte layer; and
   a confining member confining the stack.

4. The battery according to claim 3, wherein
   a confining pressure applied to the stack by the confining member is 10 MPa or more and 200 MPa or less.

5. The battery according to claim 4, wherein
   the confining pressure is 10 MPa or more and 50 MPa or less.

6. The battery according to claim 4 or 5, wherein
   the confining pressure is 30 MPa or more and 50 MPa or less.

7. The battery according to any one of claims 1 to 6, wherein
   the negative electrode includes a graphite particle and a zinc particle.

8. The battery according to any one of claims 1 to 7, wherein
   the negative electrode has:

   a negative electrode mixture layer including graphite and zinc; and
   a negative electrode current collector in contact with the negative electrode mixture layer, and
   a ratio of a mass of zinc to a sum of a mass of graphite and the mass of zinc in the negative electrode mixture layer is 10 mass% or more and 60 mass% or less.

9. The battery according to any one of claims 1 to 8, wherein
   the negative electrode further includes a solid electrolyte having lithium-ion conductivity.

FIG.1

FIG.2

5000

513 516 515

514
511
514
512

FIG.3

**EP 4 160 730 A1**

<table>
<tr><td align="center">INTERNATIONAL SEARCH REPORT</td><td>International application No.<br>PCT/JP2021/014408</td></tr>
</table>

**A. CLASSIFICATION OF SUBJECT MATTER**
H01M 4/133(2010.01)i; H01M 4/134(2010.01)i; H01M 4/36(2006.01)i; H01M 4/42(2006.01)i; H01M 4/587(2010.01)i; H01M 4/62(2006.01)i; H01M 10/052(2010.01)i; H01M 10/0562(2010.01)i; H01M 10/0565(2010.01)i; H01M 10/0585(2010.01)i
FI:H01M4/133; H01M4/134; H01M4/587; H01M4/42; H01M4/36 E; H01M10/0562; H01M10/0585; H01M4/62 Z; H01M10/052; H01M10/0565

According to International Patent Classification (IPC) or to both national classification and IPC

**B. FIELDS SEARCHED**

Minimum documentation searched (classification system followed by classification symbols)
H01M4/133; H01M4/134; H01M4/36; H01M4/42; H01M4/587; H01M4/62; H01M10/052; H01M10/0562; H01M10/0565; H01M10/0585

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-51148 A (SANYO ELECTRIC CO., LTD.) 14 March 2013 (2013-03-14) paragraphs [0008], [0013], [0016]-[0018], [0020], fig. 1 | 1-3, 7-9 |
| X | JP 2005-32687 A (SONY CORP.) 03 February 2005 (2005-02-03) paragraphs [0017], [0034], [0038]-[0039], [0042]-[0043], [0051] | 1-3, 8-9 |
| A | JP 2012-89464 A (SANYO ELECTRIC CO., LTD.) 10 May 2012 (2012-05-10) | 1-9 |
| A | JP 2013-51170 A (SANYO ELECTRIC CO., LTD.) 14 March 2013 (2013-03-14) | 1-9 |

☒ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 June 2021 (10.06.2021) | 22 June 2021 (22.06.2021) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

International application No.

PCT/JP2021/014408

C (Continuation).   DOCUMENTS CONSIDERED TO BE RELEVANT

| Category* | Citation of document, with indication, where appropriate, of the relevant passages | Relevant to claim No. |
|---|---|---|
| A | JP 7-326342 A (MITSUBISHI CABLE INDUSTRIES, LTD.) 12 December 1995 (1995-12-12) | 1-9 |

Form PCT/ISA/210 (continuation of second sheet) (January 2015)

**INTERNATIONAL SEARCH REPORT**
Information on patent family members

| | International application No. |
|---|---|
| | PCT/JP2021/014408 |

| Patent Documents referred in the Report | Publication Date | Patent Family | Publication Date |
|---|---|---|---|
| JP 2013-51148 A | 14 Mar. 2013 | (Family: none) | |
| JP 2005-32687 A | 03 Feb. 2005 | (Family: none) | |
| JP 2012-89464 A | 10 May 2012 | US 2011/0236758 A1 EP 2372818 A1 CN 102201564 A KR 10-2011-0108301 A | |
| JP 2013-51170 A | 14 Mar. 2013 | (Family: none) | |
| JP 7-326342 A | 12 Dec. 1995 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018106984 A

- JP 2018137056 A

**Non-patent literature cited in the description**

- **JIQIANG WANG et al.** Investigations of binary lithium-zinc, lithium-cadmium and lithium-lead alloys as negative electrodes in organic solvent-based electrolyte. *Solid State Ionics,* 1986, vol. 20, 185-189